# EUROPÄISCHE PATENTSCHRIFT

(11) **EP 2 282 386 B1**
(45) Veröffentlichungstag und Bekanntmachung des Hinweises auf die Patenterteilung: **20.04.2016**
(21) Anmeldenummer: 10007049.9
(22) Anmeldetag: 08.07.2010
(51) Int. Cl.: H02G 3/04

(54) **Sockelleistenkanal mit Randkaschierung**
Baseboard channel with edge lamination
Canal de plinthes doté d'un habillage d'arête

(30) Priorität: 07.08.2009 DE 202009010674 U
(43) Veröffentlichungstag der Anmeldung: 09.02.2011
(73) Patentinhaber: Tehalit GmbH, 67716 Heltersberg (DE)
(72) Erfinder: Eberle, Patrick, 66292 Riegelsberg (DE); Schnurr, Richard, 66957 Vinningen (DE)
(74) Vertreter: Nuss, Laurent

(56) Entgegenhaltungen:
- CA-A1- 2 115 779
- DE-A1- 3 049 350
- DE-B3- 10 250 849
- DE-U1-202009 002 767
- US-A- 5 406 762

## Beschreibung

Die vorliegende Erfindung betrifft einen Wandkanal, insbesondere Sockelleistenkanal gemäß dem Oberbegriff des Anspruchs 1.

Derartige Kabelkanäle sind in vielfältigen Ausführungsformen bekannt. Man vergleiche beispielsweise die DE 34 12 038 A oder die DE 94 06 088 U1. All diesen Konstruktionen ist gemein, dass entweder zwischen dem Deckel und dem Kanalunterteil oder zwischen dem Deckel und der Wand bzw. Boden ein sichtbarer Versatz vorhanden ist. Dieser Versatz ist auch bei Abdeckblenden für Elektroinstallationsgeräte bei Geräteeinbauträgern vorhanden. Optisch sind solche Schlitze, welche am Kabelkanalrand entlang verlaufen, sehr unschön und für den Kunden wenig ansprechend.

Es ist daher Aufgabe der vorliegenden Erfindung, einen Kabelkanal anzugeben, bei dem ein solcher optisch sichtbarer Versatz zwischen Deckel und Kanalunterteil bzw. zwischen Deckel und Wand/Boden kaschiert wird.

Diese Aufgabe wird gelöst durch einen Wandkanal mit den Merkmalen des Anspruchs 1. Bevorzugte Ausführungsformen finden sich in den Unteransprüchen wieder.

Der erfindungsgemäße Kabelkanal besteht wie jeder Kanal aus einem U-förmigen Kanalunterteil und einem Oberteil (Deckel). Das Kanalunterteil besteht aus einem Boden, Seitenwänden und Deckelhalteprofilen. Gegebenenfalls sind am Boden des Kanalunterteils Kabelführungsrippen zum Verlegen der Kabel und Leitungen vorgesehen. Der Deckel besteht aus zwei U-förmig nach unten angewinkelten Seitenflächen sowie Formhalteprofilen, welche mit den Deckelhalteprofilen des Kanalunterteils kooperieren und beim Aufsetzen des Oberteils auf das Unterteil miteinander verrasten.

Erfindungsgemäß ist vorgesehen, dass an den Formprofilen des Oberteils eine federnde Weichlippe ausgebildet ist, welche aus einem gegenüber der Seitenwand des Oberteils abgewinkelten Schenkel besteht, der zusammen mit der Seitenwand einen Hohlraum bildet und sich im montierten Zustand des Oberteils gegen die Wand oder den Boden abstützt und den Versatz zwischen Oberteil und Unterteil überdeckt.

Die Weichlippe ist vorzugsweise am Fußende der Seitenwand des Oberteils ausgebildet und besitzt eine V-förmige Ausgestaltung, wobei sich ein Schenkelteil der Weichlippe gegen den Untergrund (z. B. Wand oder Boden) und der andere Teil gegen die Seitenfläche der Seitenwand des Oberteils abstützt. Beim Aufsetzen des Oberteils auf das Unterteil kommt es hierbei zu einer Verformung der Weichlippe, welche aufgrund ihrer Federwirkung bestrebt ist, nach außen zu drücken. Durch die gebogene Form und die Federkraft der Weichlippe ist der Versatz zwischen Oberteil sowie Wand bzw. Boden spaltfrei. Die Weichlippe stellt eine optische Kaschierungsmöglichkeit für die natürlicherweise vorhandenen Zwischenräume dar. Dabei ist ein Vorteil der Erfindung darin zu sehen, dass keine separate Blende bei der Montage vorhanden sein muss. Das Kaschierungselement (Weichlippe) ist bereits am Oberteil ausgebildet und Bestandteil des Kanales. Die Weichlippe stellt damit ein für sich unabhängiges Element mit eigener Funktion dar, welche in erster Linie ihre Aufgabe zur Kaschierung von unbündig abschließenden Kabelkanalelementen erfüllt. Im Vergleich zu den im Stand der Technik bekannten Lösungen muss die Blende nicht breiter sein als der Deckel, um eine optische Kaschierung zwischen Kanaloberteil und -unterteil zu erreichen. Bei den bisherigen Lösungen musste die Blende seitlich verlängert sein, um einen bündigen Abschluß sicher zu stellen.

Der angewinkelte Schenkel der Weichlippe erlaubt es ferner, dass das Oberteil entlang des Kanalunterteils verschiebbar ist. Der Monteur kann dadurch das Oberteil in die gewünschte Position am Kanal bringen.

Erfindungsgemäß ist vorgesehen, dass die Weichlippe aus einem angewinkelten Schenkel besteht, vorzugsweise aus einem Längsschenkel und einem daran angewinkelten Außenschenkel. Längsschenkel und Außenschenkel stützen sich gegen den Untergrund (Wand/Boden) ab und sind verformbar. Gemäß einer Variante ist vorgesehen, dass am Boden des Unterteils eine Fußleiste ausgebildet ist, welche sich im montierten Zustand des Kanalunterteils gegen den Boden im Bereich der Sockelleiste abstützt. Am Kanalunterteil können ferner Kabelführungsrippen ausgeformt sein, die nach oben angewinkelt sind. Dadurch werden die im Kanalunterteil verlaufenden Kabel und Leitungen nach unten gehalten. Bei der Entnahme des Oberteils vom Unterteil fallen die Kabel und Leitungen nicht heraus. In einer bevorzugten Ausführungsform sind die Kabelführungsrippen mit einer Abschlussleiste versehen, welche parallel zum Boden des Unterteils verläuft und sich im montierten Zustand gegen das Oberteil von innen abstützt.

Die Erfindung wird in der nachfolgenden Zeichnung näher erläutert.

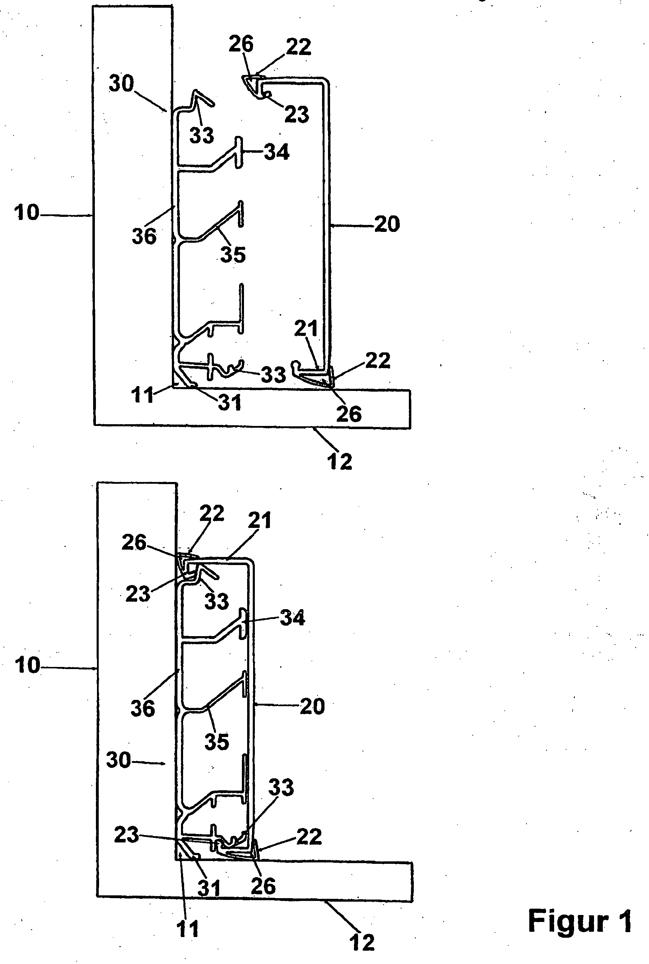

- Fig. 1: zeigt eine Seitendarstellung eines Oberteils mit einer erfingdungsgemäß ausgestalteten Weichlippe vor und im Montagezustand.

In Fig. 1 ist ein Sockelleistenkanal gezeigt, dessen Unterteil 30 an einer Wand 10 montiert ist. Am unteren Ende des Unterteils 30 ist eine Fußleiste 31 ausgestaltet, welche sich gegen den Boden 12 abstützt. Wird der Kanal im Bereich der Sockelleiste 11 montiert, so wird funktionsbedingt immer ein Spalt oder ein Versatz zwischen dem Oberteil 20 und der Wand 10 bzw. Boden 12 bestehen. Diesen Nachteil soll die am Oberteil 20 im Bereich der Formhalteprofile 23 ausgebildete federnde Weichlippe 22 vermeiden. Die Formhalteprofile 23 des Oberteils 20 kooperieren mit den Deckelhalteprofilen 33 des Kanalunterteils 30. Im nicht bzw. vormontierten Zustand ist die Weichlippe 22 unverformt. Wird das Oberteil 20 auf das Unterteil 30 aufgesetzt, greifen zum einen die Formhalteprofile 23 des Oberteils 20 hinter die Deckelhalteprofile 33 des Kanalunterteils 30. Ferner verformt sich die Weichlippe 22 und deren Längsschenkel und Außenschenkel stützen sich aufgrund der Federwirkung der Weichlippe 22 gegen die Wand 10 bzw. den Boden 12 ab. Jeglicher Spalt oder Zwischenraum zwischen Oberteil 20 und Wand 10 bzw. Boden 12 wird verschlossen.

Es ist ferner zu erkennen, dass der Längsschenkel und der Außenschenkel der Weichlippe 22 zusammen mit einer Seitenwand 21 des Oberteils 20 einen Hohlraum 26 bilden. Im Montagezustand wird dieser Hohlraum 26 bei Verformung der Weichlippe 22 verengt.

Am Boden 36 des Kanalunterteils 30 sind ferner Kabelführungsrippen 35 ausgebildet. Diese sind nach oben angewinkelt, so dass bei der Entnahme des Oberteils 20 die im Kanalunterteil 30 verlaufenden Kabel und Leitungen nicht herausfallen. Zum Abstützen des Oberteils 20 sind die Enden der Kabelführungsrippen 35 mit parallel zum Boden 36 verlaufenden Abschlussleiten 34 versehen. Im Montagezustand stützen sich diese gegen das Oberteil 20 ab (siehe untere Abbildung).

Durch die erfindungsgemäße Ausgestaltung der Weichlippe 22 wird zum einen die Kaschierfunktion erfüllt, zum anderen kann das Oberteil 20 entlang des Kanalunterteils 30 geführt werden. Die Montage wird dadurch erheblich erleichtert.

## Patentansprüche

1. Wandkanal, insbesondere Sockelleistenkanal, bestehend aus:
- einem U-förmigen Unterteil (30) mit einem Boden (36) sowie Deckelhalteprofilen (33) zum Halt eines Oberteils (20),
- einem Oberteil (20) mit Formprofilen (23), welche mit den Deckelhalteprofilen (33) des Untereils (30) kooperieren,
wobei an den Formprofilen (23) des Oberteils (20) eine federnde Weichlippe (22) ausgebildet ist, die aus einem abgewinkelten Schenkel besteht, der zusammen mit einer Seitenwand (21) des Oberteils (20) einen Hohlraum (26) bildet, **dadurch gekennzeichnet, dass** die federnde Weichlippe (22) sich im montierten Zustand des Oberteils (20) gegen die Wand (10) oder den Boden (12) abstützt und den Versatz zwischen Oberteil (20) und Unterteil (30) überdeckt.

2. Wandkanal nach Anspruch 1, **dadurch gekennzeichnet, dass** die Weichlippe (22) aus einem Längsschenkel und einem daran angewinkelten Außenschenkel besteht.

3. Wandkanal nach einem der vorhergehenden Ansprüche, **dadurch gekennzeichnet, dass** am Boden (36) des Unterteils (30) eine Fußleiste (31) ausgebildet ist, welche sich im montierten Zustand des Kanalunterteils (30) gegen den Boden (12) abstützt.

4. Wandkanal nach einem der vorhergehenden Ansprüche, **dadurch gekennzeichnet, dass** am Kanalunterteil (30) Kabelführungsrippen (35) ausgeformt sind, die nach oben angewinkelt sind.

5. Wandkanal nach Anspruch 4, **dadurch gekennzeichnet, dass** die Kabelführungsrippen (35) mit Abschlussleisten (34) abschließen, welche parallel zum Boden (36) des Unterteils (30) verlaufen und sich im montierten Zustand gegen das Oberteil (20) von innen abstützen.

6. Wandkanal nach einem der vorhergehenden Ansprüche, **dadurch gekennzeichnet, dass** die federnde Weichlippe (22) im Montagezustand verformt wird.

## Claims

1. A wall duct, in particular a skirting board duct, comprising:
- a U-shaped lower part (30) with a bottom (36) and cover holding profiles (33) for holding an upper part (20),
- an upper part (20) with shaped profiles (23) which cooperate with the cover holding profiles (33) of the lower part (30),
wherein the shaped profiles (23) of the upper part (20) have a resilient soft lip (22) formed thereon which comprises an angled-off leg which forms a cavity (26) together with a side wall (21) of the upper part (20), **characterized in that** the resilient soft lip (22) is supported against the wall (10) or the floor (12) in the mounted state of the upper part (20) and covers the offset between upper part (20) and lower part (30).

2. Wall duct according to Claim 1, **characterized in that** the soft lip (22) comprises a longitudinal leg and an outer leg angled thereon.

3. Wall duct according to either of the preceding claims, **characterized in that** the bottom (36) of the lower part (30) has a base strip (31) formed thereon which is supported against the floor (12) in the mounted state of the duct lower part (30).

4. Wall duct according to one of the preceding claims, **characterized in that** the duct lower part (30) has cable guide ribs (35) formed thereon which are angled upwards.

5. Wall duct according to Claim 4, **characterized in that** the cable guide ribs (35) terminate with closure strips (34) which extend parallel to the bottom (36) of the lower part (30) and are supported against the upper part (20) from inside in the mounted state.

6. Wall duct according to one of the preceding claims, **characterized in that** the resilient soft lip (22) is deformed in the mounted state.

## Revendications

1. Goulotte murale, en particulier goulotte formant plinthe, constituée de :
- une partie inférieure (30) en forme de U, avec un fond (36) et avec des profilés (33) de maintien de couvercle pour maintenir une partie supérieure (20),
- une partie supérieure (20) avec des profilés façonnés (23) qui coopèrent avec les profilés (33) de maintien de couvercle de la partie inférieure (30),
sachant qu'une lèvre souple (22) à élasticité de ressort est formée sur les profilés façonnés (23) de la partie supérieure (20), lèvre qui est constituée d'une branche recourbée qui forme une cavité (26) conjointement avec une paroi latérale (21) de la partie supérieure (20), **caractérisée en ce que** la lèvre souple (22) à élasticité de ressort s'appuie dans l'état monté de la partie supérieure (20) contre le mur (10) ou contre le sol (12) et couvre le décalage entre la partie supérieure (20) et la partie inférieure (30).

2. Goulotte murale selon la revendication 1, **caractérisée en ce que** la lèvre souple (22) est constituée d'une branche longitudinale et d'une branche extérieure se raccordant en angle à la branche longitudinale.

3. Goulotte murale selon l'une des revendications précédentes, **caractérisée en ce qu'**une barrette de pied (31), qui s'appuie contre le sol (12) dans l'état monté de la partie inférieure (30) de la goulotte, est formée sur le fond (36) de la partie inférieure (30).

4. Goulotte murale selon l'une des revendications précédentes, **caractérisée en ce que** des nervures (35) de guidage de câbles, qui sont inclinées vers le haut, sont formées sur la partie inférieure (30) de la goulotte.

5. Goulotte murale selon la revendication 4, **caractérisée en ce que** les nervures (35) de guidage de câbles se terminent par des barrettes de terminaison (34) qui s'étendent parallèlement au fond (36) de la partie inférieure (30) et qui, dans l'état monté, s'appuient de l'intérieur contre la partie supérieure (20).

6. Goulotte murale selon l'une des revendications précédentes, **caractérisée en ce que** la lèvre souple (22) à élasticité de ressort est déformée dans l'état de montage.
